# EUROPÄISCHE PATENTANMELDUNG

(11) **EP 4 257 524 A1**
(43) Veröffentlichungstag der Anmeldung: **11.10.2023**
(21) Anmeldenummer: 22166867.6
(22) Anmeldetag: 06.04.2022
(51) Int. Cl.: B65G 53/46

(54) **ZELLENRAD UND ZELLENRADSCHLEUSE MIT EINEM DERARTIGEN ZELLENRAD**

(71) Anmelder: Coperion GmbH, 70469 Stuttgart (DE)
(72) Erfinder: Zinser, Bruno, 88289 Waldburg (DE); Walter, Michael, 88348 Bad Saulgau (DE); Orend, Tobias, 88255 Baienfurt (DE); Schorer, Matthias, 88279 Amtzell (DE)
(74) Vertreter: Rau, Schneck & Hübner Patentanwälte Rechtsanwälte PartGmbB

(57) **Zusammenfassung**

Ein Zellenrad für eine Zellenradschleuse (1) umfasst einen eine Drehachse (6) aufweisenden Drehkörper (18), mehrere an dem Drehkörper (18) angeformte und in Umfangsrichtung (9) um die Drehachse (6) angeordnete Stege (8), die jeweils einen Hauptbereich (24), einen sich in radialer Richtung bezogen auf die Drehachse (6) dem Hauptbereich (24) anschließenden Übergangsbereich (23) und einen in radialer Richtung bezogen auf die Drehachse (6) sich dem Übergangsbereich (23) anschließenden Randbereich (21) aufweisen, wobei der Übergangsbereich (23) einen Stegdickenunterschied (Δd) zwischen dem Hauptbereich (24) auf den Randbereich (21) definiert, wobei der Stegdickenunterschied (Δd) bezogen auf eine Radialerstreckung (25) zur Drehachse (6) des Übergangsbereichs (23) mindestens 10% beträgt, wobei der Drehkörper (18) und die Stege (8) einteilig als Metallgussteil ausgeführt sind.

## Beschreibung

Die Erfindung betrifft ein Zellenrad sowie eine Zellenradschleuse mit einem derartigen Zellenrad.

Aus EP 1 950 154 A1 ist eine Zellenradschleuse für die Förderung und/oder Dosierung von Schüttgut bekannt. In der Zellenradschleuse ist ein drehbar gelagertes Zellenrad angeordnet. Das Zellenrad weist mehrere Stege auf, die in radialer Richtung bezogen auf die Drehachse des Zellenrads verjüngend ausgeführt sind.

Es ist die Aufgabe der vorliegenden Erfindung, ein Zellenrad mit verbesserten Eigenschaften, insbesondere mit verbesserten mechanischen Eigenschaften, bereit zu stellen.

Die Aufgabe ist erfindungsgemäß gelöst durch ein Zellenrad mit den in Anspruch 1 angegebenen Merkmalen sowie durch eine Zellenradschleuse mit den in Anspruch 11 angegebenen Merkmalen.

Erfindungsgemäß wurde erkannt, dass bei einem Zellenrad mit mehreren, insbesondere mindestens sechs, Stegen, den Stegen eine besondere Bedeutung zukommt.

Die Stege weisen jeweils eine Stegdicke auf, die senkrecht zur Stegebene orientiert ist.

Ein wesentliches Merkmal der Stege betrifft einen Randbereich mit reduzierter Stegdicke, die insbesondere zumindest abschnittsweise entlang des freien Randes des Steges ausgeführt ist. Die Stege weisen jeweils einen Hauptbereich, einen sich in radialer Richtung bezogen auf die Drehachse des Zellenrades dem Hauptbereich anschließenden Übergangsbereich und den Randbereich auf, der sich in radialer Richtung bezogen auf die Drehachse dem Übergangsbereich anschließt. Der Randbereich ist mittels des Übergangsbereichs gegenüber dem Hauptbereich separat abgesetzt, insbesondere stufenartig, insbesondere mehrfach gestuft, ausgeführt. Der Hauptbereich kann sich entlang der Drehachse über die gesamte Länge des Steges erstrecken. Alternativ oder zusätzlich kann in axialer Richtung bezogen auf die Drehachse ein Übergangsbereich und ein Randbereich an einer oder an beiden Axialkanten eines Steges ausgeführt sein. Der Übergangsbereich und/oder der Randbereich können entlang der Axialkanten und der Radialkante des Steges identisch ausgeführt sein.

Der Übergangsbereich definiert insbesondere die Stufe zwischen dem Hauptbereich und dem Randbereich, insbesondere einen stufenartigen Stegdickenunterschied. In Stegdickenrichtung ist der Übergang insbesondere linear oder gekrümmt ausgeführt. In radialer Richtung ist der Übergangsbereich insbesondere kurz ausgeführt und weist eine Radialerstreckung von insbesondere höchstens 20 mm, insbesondere von höchstens 15 mm, insbesondere von höchstens 10 mm und insbesondere von höchstens 5 mm auf. Der Stegdickenunterschied, der sich insbesondere aus der Stegdickendifferenz im Übergangsbereich am Übergang zu dem Hauptbereich und am Übergang zu dem Randbereich und der Radialerstreckung des Übergangsbereichs ergibt, beträgt mindestens 10%, insbesondere mindestens 20%, insbesondere mindestens 30%, insbesondere mindestens 50%, insbesondere mindestens 80%, insbesondere mindestens 100%, insbesondere mindestens 150%, insbesondere mindestens 200% und insbesondere mindestens 250%. Wenn der Übergangsbereich linear ausgeführt ist, bildet dieser ein radial nach außen gerichtetes Gefälle.

Im Hauptbereich beträgt die Stegdicke beispielsweise mindestens 5,0 mm, insbesondere mindestens 6,0 mm, insbesondere mindestens 7,0 mm, insbesondere mindestens 8,0 mm, insbesondere mindestens 10,0 mm und insbesondere mindestens 12,0 mm oder mehr.

Im Bereich des Randbereichs ist die Stegdicke gegenüber dem Hauptbereich reduziert. Insbesondere ist die Stegdicke zusätzlich reduziert, wenn im Hauptbereich bereits eine Reduzierung der Stegdicke, insbesondere bereichsweise, ausgeführt ist.

Der Randbereich erstreckt sich insbesondere zumindest abschnittsweise an mindestens einer Axial-Stirnseite und/oder insbesondere zumindest abschnittsweise an einer Radial-Stirnseite des Steges. Die Axial-Stirnseiten weisen insbesondere eine Flächennormale auf, die parallel zur Drehachse orientiert ist. Die Radial-Stirnseite weist insbesondere eine Flächennormale auf, die parallel zur Radialrichtung orientiert ist.

Überraschend wurde gefunden, dass aufgrund des Randbereichs die Quietschneigung des Zellenrads zusätzlich reduziert ist. Da die Stege im Randbereich eine, insbesondere zusätzlich, reduzierte Stegdicke aufweisen, ist ein Drehmomentbedarf bei unerwünschten Anhaftungen von Schüttgut, die zu dem genannten Stick-Slip-Effekt führen können, reduziert.

Besonders vorteilhaft ist es, dass bei dem Zellenrad der Drehkörper mit den angeformten Stegen einteilig hergestellt sind. Dazu dient insbesondere ein Gießverfahren. Es wurde gefunden, dass durch die urformende Herstellung im Gießverfahren, die eine erhöhte Gestaltungsfreiheit, insbesondere bezüglich der Geometrie der Stege ermöglicht, vorteilhaft für die Ausführung des Randbereichs genutzt werden kann. Insbesondere können nachträgliche Bearbeitungsschritte, insbesondere mechanische und insbesondere spanende Nachbearbeitungen, vermieden werden. Insbesondere wurde auch gefunden, dass im Gießverfahren hohe Oberflächengüten erzeugt werden können.

Das erfindungsgemäße Zellenrad ist in verschiedenen Baugrößen ausführbar. Insbesondere kann das Zellenrad mit einem Außen-Nenndurchmesser von etwa 100 mm bis 500 mm, insbesondere von 150 mm bis 400 mm, gefertigt werden.

Insbesondere sind mindestens sechs, insbesondere mindestens acht, insbesondere mindestens zehn und insbesondere mindestens zwölf oder mehr Stege aneinteilig an dem Drehkörper angeformt.

Vorteilhaft ist es, wenn die Anzahl der Stege gerade ist und die Stege jeweils Paarweise bezüglich einer Drehachse des Drehkörpers diametral gegenüberliegend an dem Drehkörper angeordnet sind. Der Drehkörper ist insbesondere profilförmig und insbesondere hohlprofilförmig ausgeführt. Der Drehkörper wird auch als Kranz bezeichnet.

Die Stege sind in Umfangsrichtung um die Drehachse insbesondere äquidistant angeordnet und erstrecken sich jeweils in einer parallel zur Drehachse orientierten Stegebene. Die Stegebene ist bezogen auf die Drehachse insbesondere radial orientiert und enthält insbesondere die Drehachse. In einer alternativen Ausführung kann die Stegebene gegenüber der Radialrichtung auch geneigt angeordnet sein. Die Stegebene kann auch beabstandet zu der Drehachse angeordnet sein. Die Stege können im Wesentlichen tangential an den Drehkörper anschließen.

Die Stege können jeweils bezogen auf die Stegebene symmetrisch ausgeführt sein. Bei der symmetrischen Ausführung ist der im Übergangsbereich ausgebildete Stegdickenunterschied insbesondere hälftig auf die beiden Stegwände des Steges aufgeteilt. In diesem Fall ist die Stegebene insbesondere radial bzgl. der Drehachse orientiert. Alternativ können die Stege auch unsymmetrisch bzgl. der Stegebene ausgeführt sein. In diesem Fall kann die Stegebene insbesondere in radialer Richtung oder dazu geneigt angeordnet sein.

Insbesondere sind sämtliche Stege identisch ausgeführt und/oder in identischer Weise an den Drehkörper angeformt.

Das Zellenrad ist seitenscheibenfrei oder mit Seitenscheiben ausgeführt. Die Seitenscheiben sind insbesondere jeweils axial abschließend an den Stegen befestigt. In diesem Fall sind die von den Stegen gebildeten Kammern axial geschlossen.

Das Zellenrad weist eine Antriebswelle auf, die mit dem Drehkörper in drehmomentübertragenderweise verbunden ist.

Eine Ausführung der Stege gemäß Anspruch 2 vereinfacht die Fertigung und insbesondere die Maßhaltigkeit der Stege und damit des Zellenrads insgesamt. Es wurde gefunden, dass eine im Bereich des Randbereichs der Stege verbleibende Minimaldicke insbesondere konstant ausgeführt ist. Das bedeutet, dass die Stege in einem Randbereich zumindest abschnittsweise in Radialrichtung und/oder in Axialrichtung und insbesondere durchgängig mit parallelen Stegwänden ausgeführt sind. Die Minimaldicke kann auch Abweichungen aufweisen, wobei die Abweichungen klein sind gegenüber der Minimaldicke, insbesondere kleiner als 10% der Minimaldicke. Eine Abweichung kann beispielsweise dadurch gegeben sein, dass die Stegwände im Bereich des Randbereichs mit einem Neigungswinkel zueinander angeordnet sind, wobei der Neigungswinkel insbesondere höchstens 10° beträgt, insbesondere höchstens 8°, insbesondere höchstens 6°, insbesondere höchstens 5°, insbesondere höchstens 3° und insbesondere höchstens 1°. In diesem Fall sind die Stege im Bereich des Randbereichs keilförmig ausgeführt, insbesondere radial nach außen verjüngend.

Die Minimaldicke beträgt insbesondere zwischen 1,0 mm und 4,0 mm, insbesondere zwischen 1,5 mm und 3,0 mm. Die Minimaldicke ermöglicht insbesondere eine zuverlässige und insbesondere fehlerfreie Durchführung des Gießverfahrens. Insbesondere wird dadurch gewährleistet, dass die Gussform im Bereich der Minimaldicke zuverlässig mit Metallschmelze gefüllt wird. Insbesondere ist die Minimaldicke kleiner als eine Maximaldicke. Insbesondere entspricht die Minimaldicke höchstens 20% einer Maximaldicke entspricht, insbesondere höchstens 15% einer Maximaldicke und insbesondere höchstens 10% einer Maximaldicke. Die Maximaldicke garantiert die ausreichende Festigkeit und/oder Steifigkeit des Steges. Als Maximaldicke wird die Dicke des Steges am Übergang zu dem Drehkörper verstanden.

Es wurde gefunden, dass Fertigungstoleranzen, die bei dem zugrundeliegenden Gießverfahren inhärent sind, sich nicht nachteilig auf die Maßhaltigkeit des Zellenrads und insbesondere der Stege des Zellenrads auswirken. Das bedeutet, dass das Zellenrad auch bei unvermeidbaren Fertigungstoleranzen beim Gießen maßhaltig hergestellt werden kann. Insbesondere in einem dem Gießverfahren nachfolgenden Nachbearbeitungsschritt werden die Stege des Zellenrads auf den nominalen Außendurchmesser des Zellenrads bearbeitet. Da die Stege im Randbereich insbesondere mit konstanter Minimaldicke ausgeführt sind, hat das Ablängen der Stege in radialer Richtung keinen Einfluss auf die Minimaldicke, die außenliegend, insbesondere in radialer Richtung, am Steg ausgebildet ist.

Das Zellenrad weist ein verbessertes und insbesondere stabileres Laufverhalten auf. Schwingungen, Vibrationen oder Rattergeräusche sind vermieden. Durch den Randbereich ist einerseits die Reibfläche reduziert, andererseits ist eine Spaltabdichtung gegeben.

Ein Zellenrad gemäß Anspruch 3 weist gute Laufeigenschaften auf.

Ein Zellenrad gemäß Anspruch 4 ist robust. Die Ausgestaltung der Stege ist unkompliziert. Die Keilform der Stege erstreckt sich insbesondere im Hauptbereich.

Ein Zellenrad gemäß Anspruch 5 ermöglicht eine robuste Ausgestaltung der Stege. Der Randbereich weist eine Breite von mindestens 1,0 mm, insbesondere mindestens 1,5 mm, insbesondere mindestens 2,0 mm, insbesondere höchstens 8,0 mm und insbesondere von höchstens 10,0 mm auf. Die Breite des Randbereichs ist in einer senkrecht zur Stegdicke gerichteten Ebene angeordnet und senkrecht zu der jeweiligen Stirnseite, also einer der Axial-Stirnseiten oder der Radial-Stirnseite, orientiert. Der Steg weist im Bereich des Randbereichs eine Mindestbreite auf. Die Breite ist insbesondere entlang des Umfangs der Stege konstant ausgeführt.

Ein Zellenrad gemäß Anspruch 6 ermöglicht Gewichtseinsparungen und Kosteneinsparungen. Insbesondere kann auf Komponenten aus anderen metallischen Werkstoffen die beispielsweise Aluminium und insbesondere Aluminiumlegierungen, verzichtet werden. Insbesondere kann das Zellenrad in einem Feingussverfahren hergestellt werden, wodurch das Zellenrad selbst eine verbesserte Oberfläche und Optik aufweist. Ein derartiges Zellenrad ist für Hygieneanwendungen besonders geeignet. Die Reinigbarkeit des Zellenrads ist verbessert.

Alternativ kann das Zellenrad aus einem Leichtbauwerkstoff, insbesondere aus einem Aluminiumwerkstoff, hergestellt werden. Ein derartiges Zellenrad weist verbesserte Leichtbaueigenschaften auf.

Ein Zellenrad gemäß Anspruch 7 ist besonders robust aufgeführt. Der Übergangsbereich am Drehkörper kann massiv ausgeführt sein. Dadurch, dass der Übergangsbereich kantenfrei ausgeführt ist, können Spannungsspitzen in Folge des Fertigungs- und/oder Montageverfahrens des Zellenrades und insbesondere des dynamischen Betriebs, vermieden werden. Die Lebensdauer des Zellenrades ist erhöht. Insbesondere ermöglicht eine Verrundung im Übergangsbereich eine vorteilhafte Nachbearbeitung, beispielsweise durch Polieren. Der Nachbearbeitungsaufwand ist reduziert.

Ein Zellenrad gemäß Anspruch 8 reduziert den Montageaufwand. Wenn die Antriebswelle einstückig mit dem Zellenrad ausgeführt ist, insbesondere durch Urformen hergestellt ist, weist das Zellenrad eine höhere Materialhomogenität auf. Der Faserverlauf ist ungestört und homogen. Insbesondere für die Ausgestaltung der Antriebswelle ergeben sich zusätzliche Freiheitsgrade bei der Fertigung, indem insbesondere Funktionskomponenten an das Zellenrad einteilig mitangeformt werden. Die Funktionsintegration ist dadurch erhöht.

Eine alternative Ausführung des Zellenrads gemäß Anspruch 9 ermöglicht ein unkompliziertes Fügen der Antriebswelle, insbesondere in dem Drehkörper. Insbesondere weist der Drehkörper eine Durchgangsbohrung auf, durch die die Antriebswelle geführt und mit dem Drehkörper gefügt ist. Insbesondere ist die Antriebswelle mit dem Drehkörper verschweißt.

Es ist alternativ denkbar, dass das Zellenrad ohne Durchgangsbohrung ausgeführt ist und an den stirnseitigen Enden des Drehkörpers jeweils ein separater Wellenstummel angebracht und mit dem Zellenrad gefügt, entweder lösbar, insbesondere geschraubt oder gestiftet, oder unlösbar, insbesondere geschweißt ist.

Stege gemäß Anspruch 10 ermöglichen die Herstellung des Zellenrades mit reduziertem Materialbedarf und/oder ein vergrößertes Kammervolumen. Die Stegdicke ist, insbesondere in dem Hauptbereich und insbesondere in radialer Richtung bezogen zur Drehachse und insbesondere bereichsweise, veränderlich ausgeführt. Mit zunehmenden Abstand zur Drehachse nimmt die Stegdicke ab. Die Stege sind in radialer Richtung bezogen auf die Drehachse insbesondere verjüngend in Dickenrichtung ausgeführt. Die Verjüngung erfolgt entlang der radialen Richtung zur Drehachse insbesondere zumindest abschnittsweise, insbesondere kontinuierlich, insbesondere linear. Die Stegdicke kann in dem Hauptbereich zumindest abschnittsweise auch konstant ausgeführt sein.

Es wurde gefunden, dass derart verjüngende Stege eine erhöhte Steifigkeit bei gleichem Kammervolumen aufweisen. Als Kammervolumen wird das Volumen bezeichnet, das in Umfangsrichtung zwischen zwei benachbarten Stegen, in Radialrichtung nach innen durch den Drehkörper und nach außen durch einen imaginären Umfangszylinder um die Außenkanten der Stege und in Axialrichtung durch imaginäre Stirnseiten an den Stegen begrenzt wird. Das bedeutet auch, dass die sich verjüngenden Stege bei gleicher Steifigkeit ein vergrößertes Kammervolumen und damit eine erhöhte Förderleistung, ermöglichen.

Die aufgrund der Stegverjüngung erzielte erhöhte Steifigkeit bewirkt, dass aus dem Stand der Technik bekannte Versteifungsbolzen bei dem erfindungsgemäßen Zellenrad entbehrlich sein können. Das erfindungsgemäße Zellenrad ist insbesondere ein bolzenloses Zellenrad. Dadurch kann das Kammervolumen zusätzlich erhöht werden. Darüber hinaus ist dieses Zellenrad für Hygieneanwendungen geeignet, da unerwünschte Spalte und Hinterschnitte in der bolzenlosen Ausführung vermieden sind.

Insbesondere bei großen Baugrößen des Zellenrades kann es vorteilhaft sein, wenn Versteifungsbolzen, insbesondere zum Versteifen benachbart angeordneter Stege angebracht sind. Ein derartiges Zellenrad weist eine erhöhte Steifigkeit auch bei großer Baugröße auf.

Es wurde auch gefunden, dass die verjüngenden Stege eine reduzierte Quietschneigung im Vergleich zu bolzenlosen Zellenrädern aufweisen, also die Geräuschemission wäre des Betriebs einer derartigen Zellenradschleuse reduziert ist. Grund dafür ist, dass Vibrationen durch wiederholtes, insbesondere periodisches, Anhaften und Wiederfreisetzten der Zellenradstege, also des sogenannten Stick-Slip-Effekts, reduziert werden.

Durch die sich verjüngende Ausführung der Stege ergibt sich zudem eine Materialeinsparung bei der Herstellung des Zellenrads. Das Zellenrad kann materialeffizient und/oder kosteneffizient hergestellt werden. Aufwändiges Schweißen und spanende Fertigungsverfahren werden vermieden.

Eine Zellenradschleuse gemäß Anspruch 11 weist im Wesentlichen die Vorteile des Zellenrads auf, worauf hiermit verwiesen wird. Eine derartige Zellenradschleuse kann insbesondere für Hygieneanwendungen eingesetzt werden.

Sowohl die in den Patentansprüchen angegebenen Merkmale als auch die in der nachfolgenden Beschreibung eines Ausführungsbeispiels des erfindungsgemäßen Zellenrads angegebenen Merkmale sind jeweils für sich allein oder Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Zusätzliche Merkmale, vorteilhafte Ausgestaltungen und Einzelheiten der Erfindung ergeben sich aus der nachfolgenden Beschreibung von Ausführungsbeispielen anhand der Zeichnung. Es zeigen:
- Fig. 1: eine schematisierte Querschnittdarstellung einer Zellenradschleuse für Schüttgut,
- Fig. 2: eine perspektivische Darstellung eines erfindungsgemäßen Zellenrads,
- Fig. 3: eine Frontansicht des Zellenrads gemäß Fig. 2,
- Fig. 4: eine vergrößerte Detailansicht des Details IV in Fig. 3,
- Fig. 5: einen Längsschnitt des Zellenrads gemäß Fig. 2,
- Fig. 6: eine vergrößerte Detailansicht des Details VI in Fig. 5,
- Fig. 7: eine Schnittdarstellung gemäß Schnittlinie VII-VII in Fig. 3,
- Fig. 8: eine vergrößerte Detailansicht gemäß Detail VIII in Fig. 7.

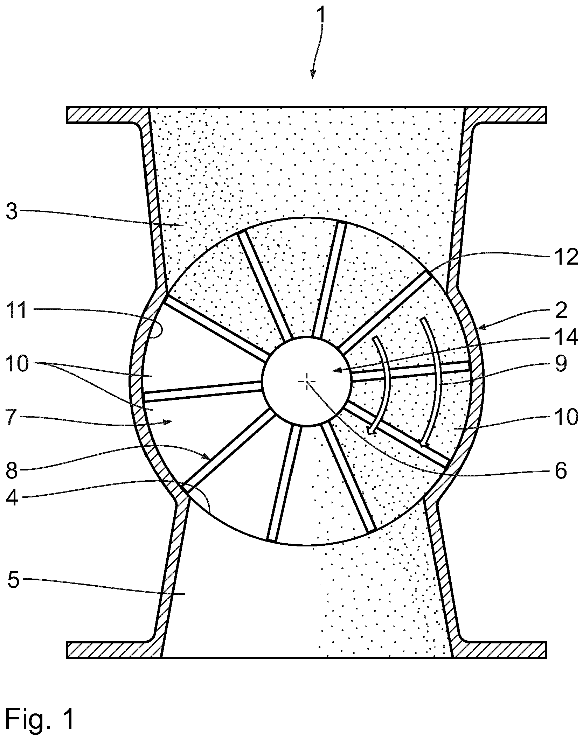

Eine in Fig. 1 als Ganzes mit 1 gekennzeichnete Zellenradschleuse ist als Austragsschleuse ausgeführt. Die Zellenradschleuse 1 kann auch als Durchblasschleuse ausgeführt sein. Die Zellenradschleuse 1 hat ein Gehäuse 2, welches in Fig. 1 nach oben begrenzt ist durch einen Zulaufschacht 3, der auch als Einlaufschacht bezeichnet wird und in eine Zellenradgehäusebohrung 4 einmündet. Die Zellenradgehäusebohrung wird der Einfachheit halber im Folgenden als Bohrung 4 bezeichnet.

Nach unten in Fig. 1 ist das Gehäuse 2 begrenzt durch einen Auslaufschacht 5, der aus der Bohrung 4 ausmündet.

Die Bohrung 4 hat die Form eines in Fig. 1 senkrecht zur Zeichenebene liegen Hohlzylinders mit einer Zylinderachse 6. Ein Zellenrad 7 ist in der Bohrung 4 um eine mit der Zylinderachse 6 zusammenfallende Drehachse drehantreibbar angeordnet. Das Zellenrad 7 ist seitenscheibenfrei ausgeführt. Die durch Zellenradstege 8 voneinander in Umfangsrichtung 9 um die Drehachse 6 voneinander getrennten sektorförmigen Zellenradkammern 10 werden seitlich, also entlang der Drehachse 6, von jeweils stirnseitig am Gehäuse 2 angebrachten, in Fig. 1 nicht dargestellten, Seitendeckeln begrenzt. Die Seitendeckel stellen stirnseitige Begrenzungen der Bohrung 4 dar. Die Zellenradstege werden der Einfachheit halber als Stege 8 bezeichnet. Die Stege 8 weisen jeweils eine einer Innenwand 11 der Bohrung 4 zugewandte Außenfläche 12 auf. Die Außenfläche 12 wird durch Radial-Stirnseiten 20 der Stege 8 gebildet.

Die Bohrung 4 bildet einen Innenraum der Zellenradschleuse 1, durch den Fördergut, insbesondere Schüttgut, vom Einlaufschacht 3 hin zum Auslaufschacht 5 mittels Drehung des Zellenrads 7 gefördert wird.

Das Zellenrad 7 mit den Stegen 8 ist komplementär zu Bohrung 4 ausgeformt. Die Außenflächen 12 der Stege 8 laufen mit definiertem Spiel, je nach Größe und Anwendung des Zellenrads 7 zwischen 0,05 mm und 1,5 mm, an der Innenwand 11 der Bohrung 4 vorbei. Die Innenwand 11 kann eine Beschichtung aufweisen.

Ebenfalls mit definiertem Spiel laufen aufgrund der komplementären Form des Zellenrads 7 zur Bohrung 4 Stirnwände der Stege 8 an Innenwänden der Seitendeckel vorbei. Die den Seitendeckeln zugewandten Stirnwände der Stege 8 bilden Axial-Stirnseiten 19.

Das Zellenrad 7 weist eine Antriebswelle 14 auf, die drehfest mit einem Drehkörper 18 verbunden ist. An der Antriebswelle 14 stirnseitig angeordnete Wellenstummel 15 sind in Lagerstellen in Seitendeckeln der Zellenradschleuse gelagert. Zwischen den Lagerstellen und der Bohrung 4 ist der jeweilige Wellenstummel 15 gegen den entsprechenden Seitendeckel über Dichtungen abgedichtet. Zwischen den Dichtungen und einer Innenwand des Seitendeckels kann in diesem eine Spülleitung ausgeführt sein, die eine Fluidverbindung zwischen der Bohrung 4 und einer Fluidquelle, insbesondere einer Druckgasquelle, herstellt zur Spülung einer Nabenbohrung im Seitendeckel.

Gemäß der rein schematischen Darstellung in Fig. 1 weist das Zellenrad 7 zehn Zellenradkammern 10 auf, die identisch ausgeführt sind. Es können auch mehr oder weniger Zellenradkammern 10 vorgesehen sein. Jede Zellenradkammer 10 weist ein entsprechendes Kammervolumen auf, das im Wesentlichen einem Hohlzylinder-Sektor entspricht und sich entlang der Drehachse 6 erstreckt. Die Zellenradkammern 10 sind jeweils zellenradseitig durch einander zugewandte Wandflächen benachbarter Stege 8 und einen im Zellenradgrund die benachbarten Stege 8 verbindenden Übergangsbereich 16 der Antriebswelle 14 gebildet. Der Übergangsbereich 16 ist insbesondere kantenfrei ausgeführt und insbesondere verrundet mit einem Übergangsbereich-Rundungsradius R₁.

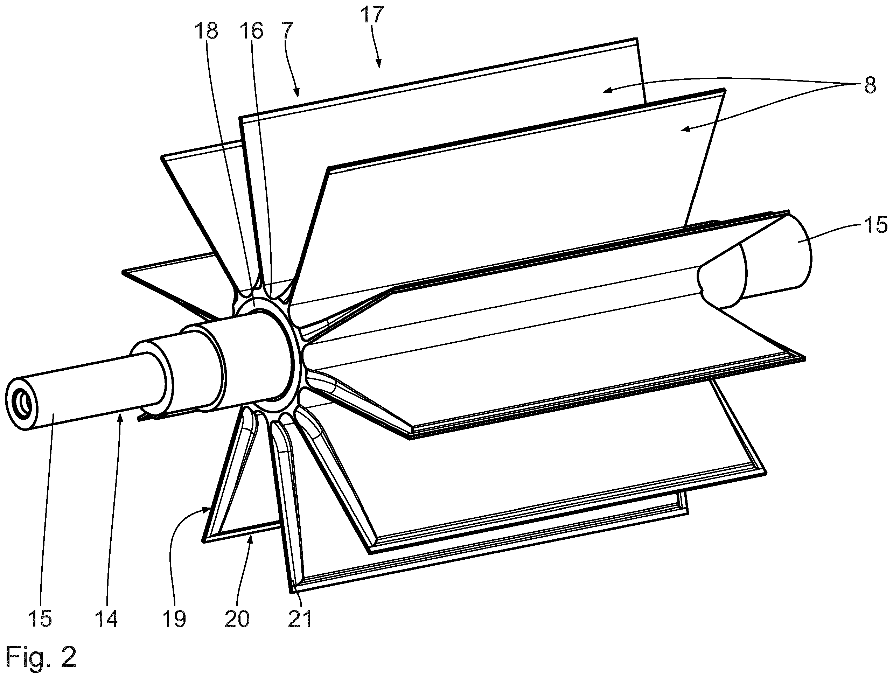

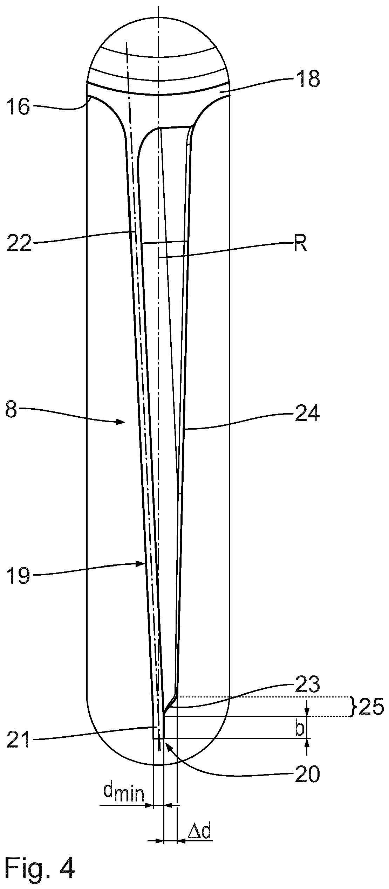

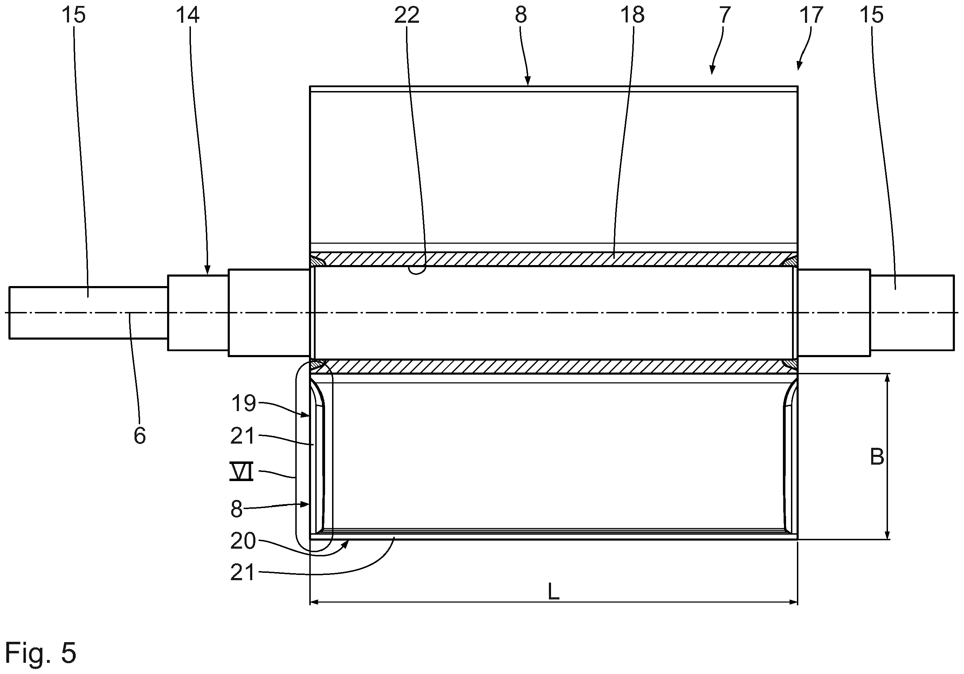

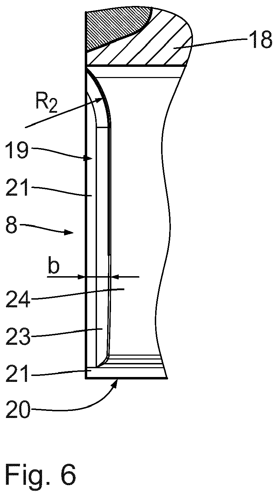

Nachfolgend wird anhand von Fig. 2 bis 8 das Zellenrad 7 näher erläutert.

Fig. 2 zeigt eine Anordnung 17 mit einem erfindungsgemäßen Zellenrad 7 und der Antriebswelle 14. Das Zellenrad 7 weist den Drehkörper 18 auf, der konzentrisch zur Drehachse 6 des Zellenrads 7 ausgeführt ist. Der Drehkörper 18 weist eine Durchgangsbohrung 22 auf, in der die Antriebswelle 14 angeordnet ist. Die Antriebswelle 14 ist jeweils stirnseitig mit dem Drehkörper 18 gefügt, insbesondere verschweißt. Es sind zusätzlich oder alternativ auch andere Fügeverbindungen möglich. Wesentlich ist, dass die Antriebswelle 14 in drehmomentübertragenerweise mit dem Zellenrad 7 verbunden ist.

Gemäß dem gezeigten Ausführungsbeispiel sind der Drehkörper 18 und die Stege 8 einteilig als Gussteil hergestellt und mit der separat hergestellten Antriebswelle 14 fest verbunden. Das Gussteil ist insbesondere durch Metallguss und insbesondere durch Feinguss, insbesondere aus Edelstahlmaterial hergestellt.

In einer alternativen Ausführung kann das Zellenrad 7 insgesamt, also insbesondere inklusive der Antriebswelle 14, einteilig als Gussteil hergestellt sein.

Das Zellenrad 7 weist gemäß der gezeigten Ausführungsform zehn Stege 8 auf. Die Stege 8 sind einteilig an dem Drehkörper 18 angeformt.

Die Stege 8 sind jeweils in Radialrichtung R bezogen auf die Drehachse 6 verjüngend ausgeführt. Das bedeutet, dass eine Stegdicke, die insbesondere senkrecht zur Radialrichtung R orientiert ist, mit zunehmenden Abstand zu der Drehachse 6 abnimmt. Insbesondere weisen die Stege 8 jeweils ein V-Profil in einer Ebene senkrecht zur Drehachse 6 auf, das einen Öffnungswinkel v von mindestens 0,5° und höchstens 10° aufweist.

Die Stege 8 sind im Wesentlichen keilförmig ausgeführt, insbesondere mit einer rechteckförmigen Grundfläche. Die Stege 8 weisen eine, insbesondere entlang der Drehachse 6 orientierte, Steglänge L und eine senkrecht dazu orientierte, insbesondere entlang der Radialrichtung R orientierte, Stegbreite B auf. Die Stege 8 sind entlang einer der Platten-Stirnfläche einteilig am Drehkörper 18 angeformt. An den drei freiliegenden Stirnflächen, also an den beiden Axial-Stirnseiten 19 und an der Radial-Stirnseite 20 weisen die Stege 8 jeweils einen umlaufenden zusätzlichen Randbereich 21 auf, also zusätzlich zu der sich verjüngenden Ausführung der Stege 8 in einem Hauptbereich 24. Ein Übergang von dem Hauptbereich 24 zu dem zusätzlichen Randbereich 21 erfolgt in einem Übergangsbereich 23. Der Übergangsbereich 23 erstreckt sich im Wesentlichen parallel entlang des äußeren Randes der Stege 8, also entlang der Axial-Stirnseiten 19 und der Radial-Stirnseite 20, insbesondere zwischen dem Hauptbereich 24 und dem jeweiligen zusätzlichen Randbereich 21.

Der Übergangsbereich 23 weist in Radialrichtung R eine Radialerstreckung 25 sowie einen Stegdickenunterschied Δd auf, der bezogen auf die Radialerstreckung 25 mindestens 10 % beträgt.

Der zusätzliche Randbereich 21 kann auch abschnittsweise unterbrochen sein. Der zusätzliche Randbereich 21 kann auch nur einzelnen oder mehreren Stirnseiten 19, 20 ausgeführt sein.

Damit der zusätzliche Randbereich 21 an den Axial-Stirnseiten 19 mechanisch vorteilhaft ausgeführt ist, ist sie mit einem Rundungsradius R₂ ausgeführt, der zu dem Drehkörper 18 hin an dem Steg 8 ausschleicht. Der Rundungsradius R₂ kann entlang einer der Stirnseiten 19, 20 veränderlich ausgeführt sein und insbesondere für die verschiedenen Stirnseiten 19, 20 variieren.

Der zusätzliche Randbereich 21 weist eine Breite b auf, die an der Radial-stirnseite 20 in Radialrichtung R an den Axial-Stirnseiten 19 jeweils in Axialrichtung, also parallel zur Drehachse 6, orientiert ist. Die Breite b ist insbesondere klein im Vergleich zur Stegbreite B und beträgt insbesondere höchstens 5 % der Stegbreite B. Die Breite b kann entlang einer der Stirnseiten 19, 20 veränderlich ausgeführt sein und insbesondere für die verschiedenen Stirnseiten 19, 20 variieren.

Der Steg 8 weist eine Stegebene 22 auf, die bezogen auf die Drehrichtung 9 an der vorderen Stegwand angeordnet ist. Der Steg 8 ist bzgl. der Stegebene 22 unsymmetrisch ausgeführt.

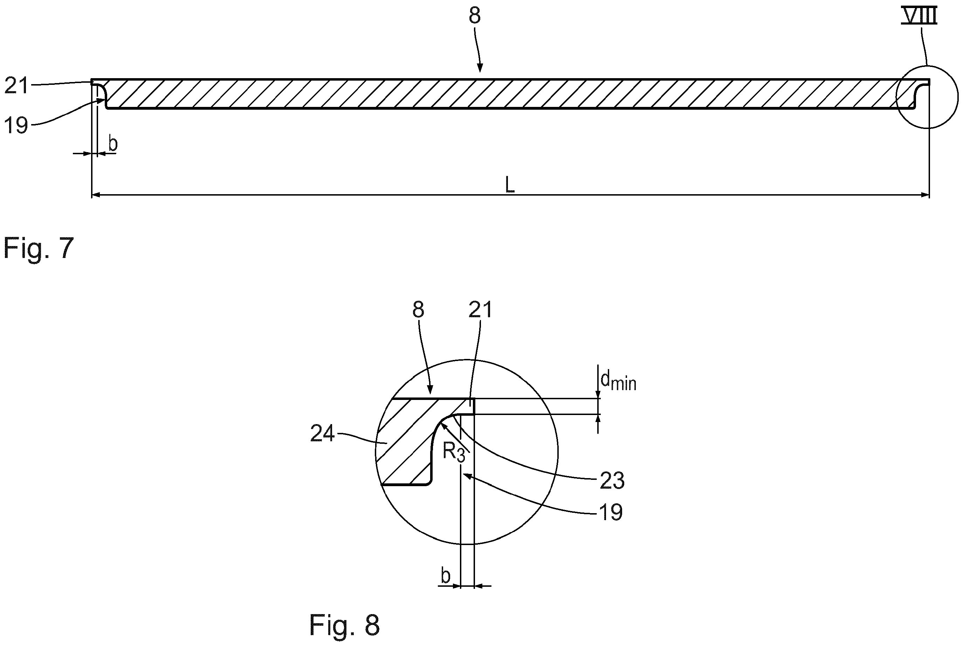

Wie insbesondere aus Fig. 7 und 8 deutlich wird, ist der zusätzliche Randbereich 21 an den Axial-Stirnseiten 19 auch in einer Richtung parallel zur Drehachse 6, also in Längsrichtung des Steges 8, also parallel zu seiner Längserstreckung, mit einem Rundungsradius R₃ ausgeführt. Die Stege 8 sind insbesondere jeweils derart ausgeführt, dass sie mit der verbleibenden Minimaldicke dₘᵢₙ bezogen auf die Drehrichtung 9 vorne angeordnet sind und der zusätzliche Randbereich 21 an einer bezogen auf die Drehrichtung 9 rückwärtigen Seite der Stege 8, also im Schatten der Stege 8, angeordnet ist.

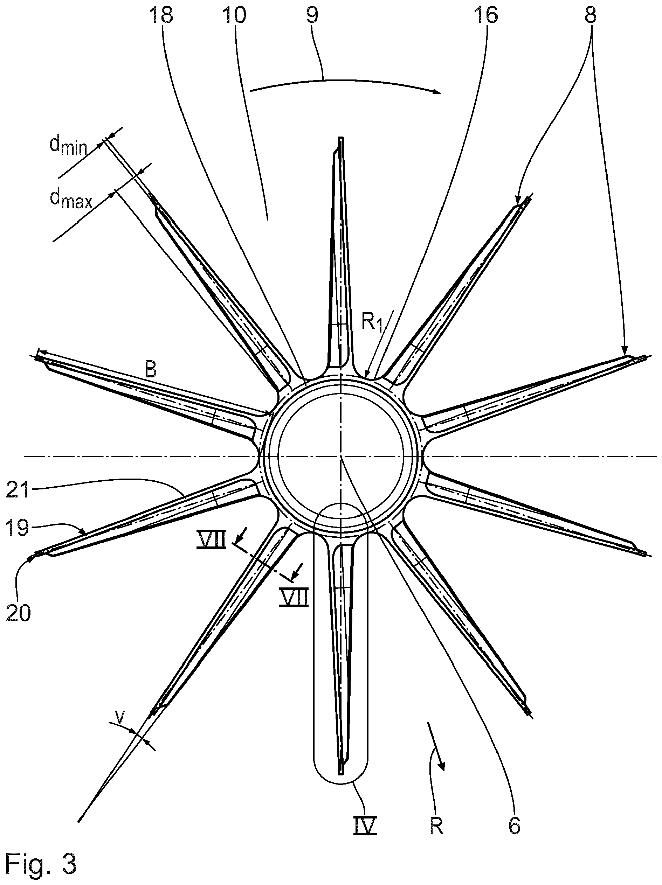

Wie insbesondere in Fig. 3 erkennbar, ist der zusätzliche Randbereich 21 derart ausgeführt, dass der Steg 8 eine verbleibende Minimaldicke dₘᵢₙ aufweist, die insbesondere entlang des Steges 8, insbesondere in radialer Richtung R des Steges 8 konstant ist.

Der Übergangsbereich 23 weist zu den Axial-Stirnseiten 19 hin eine Krümmung auf, die durch den Rundungsradius R₃ vorgegeben ist. Der Übergangsbereich 23 an den Axial-Stirnseiten 19 ist insbesondere jeweils identisch ausgeführt. Der Übergangsbereich 23 an den Axial-Stirnseiten 19 ist unterschiedlich zu dem Übergangsbereich 23 an der Radial-Stirnseite 20 ausgeführt.

Die Breite b des Randbereichs 21 an den Axial-Stirnseiten 19 des Steges 8 erstreckt sich insbesondere entlang einer im Wesentlichen konstanten Minimaldicke dₘᵢₙ. Die Dicke d des Randbereichs 21 kann innerhalb der Breite b, insbesondere in Folge des Rundungsradius R₃ gegenüber der Minimaldicke dₘᵢₙ ansteigen.

## Patentansprüche

1. Zellenrad für eine Zellenradschleuse (1), umfassend
a. einen eine Drehachse (6) aufweisenden Drehkörper (18),
b. mehrere an dem Drehkörper (18) angeformte und in Umfangsrichtung (9) um die Drehachse (6) angeordnete Stege (8), die jeweils einen Hauptbereich (24), einen sich in radialer Richtung bezogen auf die Drehachse (6) dem Hauptbereich (24) anschließenden Übergangsbereich (23) und einen in radialer Richtung bezogen auf die Drehachse (6) sich dem Übergangsbereich (23) anschließenden Randbereich (21) aufweisen,
wobei der Übergangsbereich (23) einen Stegdickenunterschied (Δd) zwischen dem Hauptbereich (24) auf den Randbereich (21) definiert, wobei der Stegdickenunterschied (Δd) bezogen auf eine Radialerstreckung (25) zur Drehachse (6) des Übergangsbereichs (23) mindestens 10 % beträgt,
wobei der Drehkörper (18) und die Stege (8) einteilig als Metallgussteil ausgeführt sind.

2. Zellenrad gemäß Anspruch 1, **dadurch gekennzeichnet, dass** die Stege (8) im Bereich des Randbereichs (21) eine, insbesondere konstante, Minimaldicke (dₘᵢₙ) aufweisen, die insbesondere mindestens 1,0 mm und höchstens 4,0 mm, insbesondere mindestens 1,5 mm und höchstens 3,0 mm beträgt.

3. Zellenrad gemäß einem der vorstehenden Ansprüche, **dadurch gekennzeichnet, dass** der Randbereich (21) randseitig umlaufend ausgeführt ist.

4. Zellenrad gemäß einem der vorstehenden Ansprüche, **dadurch gekennzeichnet, dass** die Stege (8) zumindest bereichsweise, insbesondere im Hauptbereich (24), keilförmig ausgeführt sind, insbesondere mit einer rechteckförmigen Grundfläche, die eine entlang der Drehachse (6) orientierte Steglänge (L) und eine dazu senkrecht orientierte Stegbreite (B) aufweist.

5. Zellenrad gemäß einem der vorstehenden Ansprüche, **dadurch gekennzeichnet, dass** der Randbereich (21) eine, insbesondere konstante, Breite (b) von mindestens 1,0 mm aufweist, wobei die Breite (b) insbesondere höchstens 10% der Stegbreite (B), insbesondere höchstens 5% der Stegbreite (B), insbesondere höchstens 3% der Stegbreite (B), insbesondere höchstens 2% der Stegbreite (B) und insbesondere höchstens 0,5% der Stegbreite (B) beträgt.

6. Zellenrad gemäß einem der vorstehenden Ansprüche, **dadurch gekennzeichnet, dass** das Zellenrad (7) Stahl, insbesondere Edelstahl, aufweist.

7. Zellenrad gemäß einem der vorstehenden Ansprüche, **dadurch gekennzeichnet, dass** ein Übergangsbereich (16) am Drehkörper (18) zwischen zwei benachbarten Stegen (8) kantenfrei, insbesondere verrundet, ausgeführt ist.

8. Zellenrad gemäß einem der vorstehenden Ansprüche, **gekennzeichnet durch** eine Antriebswelle (14), die einstückig durch Gießen mit dem Drehkörper (18) verbunden ist.

9. Zellenrad gemäß einem der Ansprüche 1 bis 7, **gekennzeichnet durch** eine Antriebswelle (14), die in einer Durchgangsbohrung (22) des Drehkörper (18) angeordnet und damit gefügt, insbesondere verschweißt, ist.

10. Zellenrad gemäß einem der vorstehenden Ansprüche, **dadurch gekennzeichnet, dass** die Stege (8) jeweils eine, insbesondere senkrecht zur Radialrichtung (R) orientierte, Stegdicke aufweisen, die, insbesondere zumindest bereichsweise, mit zunehmendem Abstand zur Drehachse (6) abnimmt.

11. Zellenradschleuse mit einem Gehäuse (2) und mit einem in dem Gehäuse (2) drehbar gelagerten Zellenrad (7) gemäß einem der vorstehenden Ansprüche.

## Geänderte Patentansprüche

### Geänderte Patentansprüche gemäss Regel 137(2) EPÜ.

1. Zellenrad für eine Zellenradschleuse (1), umfassend
a. einen eine Drehachse (6) aufweisenden Drehkörper (18),
b. mehrere an dem Drehkörper (18) angeformte und in Umfangsrichtung (9) um die Drehachse (6) angeordnete Stege (8), die jeweils einen Hauptbereich (24) und einen Randbereich (21) aufweisen, **dadurch gekennzeichnet, dass**
- die Stege (8) jeweils einen sich in radialer Richtung bezogen auf die Drehachse (6) dem Hauptbereich (24) anschließenden Übergangsbereich (23) aufweisen,
- sich der Randbereich (21) in radialer Richtung bezogen auf die Drehachse (6) dem Übergangsbereich (23) anschließt,
- der Übergangsbereich (23) einen Stegdickenunterschied (Δd) zwischen dem Hauptbereich (24) auf den Randbereich (21) definiert,
- der Stegdickenunterschied (Δd) bezogen auf eine Radialerstreckung (25) zur Drehachse (6) des Übergangsbereichs (23) mindestens 10 % beträgt,
- der Drehkörper (18) und die Stege (8) einteilig als Metallgussteil ausgeführt sind,
- die Stege (8) im Bereich des Randbereichs (21) eine Minimaldicke (dₘᵢₙ) aufweisen, die mindestens 1,0 mm und höchstens 4,0 mm beträgt.

2. Zellenrad gemäß Anspruch 1, **dadurch gekennzeichnet, dass** die, insbesondere konstante, Minimaldicke (dₘᵢₙ) mindestens 1,5 mm und höchstens 3,0 mm beträgt.

3. Zellenrad gemäß einem der vorstehenden Ansprüche, **dadurch gekennzeichnet, dass** der Randbereich (21) randseitig umlaufend ausgeführt ist.

4. Zellenrad gemäß einem der vorstehenden Ansprüche, **dadurch gekennzeichnet, dass** die Stege (8) zumindest bereichsweise, insbesondere im Hauptbereich (24), keilförmig ausgeführt sind, insbesondere mit einer rechteckförmigen Grundfläche, die eine entlang der Drehachse (6) orientierte Steglänge (L) und eine dazu senkrecht orientierte Stegbreite (B) aufweist.

5. Zellenrad gemäß einem der vorstehenden Ansprüche, **dadurch gekennzeichnet, dass** der Randbereich (21) eine, insbesondere konstante, Breite (b) von mindestens 1,0 mm aufweist, wobei die Breite (b) insbesondere höchstens 10% der Stegbreite (B), insbesondere höchstens 5% der Stegbreite (B), insbesondere höchstens 3% der Stegbreite (B), insbesondere höchstens 2% der Stegbreite (B) und insbesondere höchstens 0,5% der Stegbreite (B) beträgt.

6. Zellenrad gemäß einem der vorstehenden Ansprüche, **dadurch gekennzeichnet, dass** das Zellenrad (7) Stahl, insbesondere Edelstahl, aufweist.

7. Zellenrad gemäß einem der vorstehenden Ansprüche, **dadurch gekennzeichnet, dass** ein Übergangsbereich (16) am Drehkörper (18) zwischen zwei benachbarten Stegen (8) kantenfrei, insbesondere verrundet, ausgeführt ist.

8. Zellenrad gemäß einem der vorstehenden Ansprüche, **gekennzeichnet durch** eine Antriebswelle (14), die einstückig durch Gießen mit dem Drehkörper (18) verbunden ist.

9. Zellenrad gemäß einem der Ansprüche 1 bis 7, **gekennzeichnet durch** eine Antriebswelle (14), die in einer Durchgangsbohrung (22) des Drehkörper (18) angeordnet und damit gefügt, insbesondere verschweißt, ist.

10. Zellenrad gemäß einem der vorstehenden Ansprüche, **dadurch gekennzeichnet, dass** die Stege (8) jeweils eine, insbesondere senkrecht zur Radialrichtung (R) orientierte, Stegdicke aufweisen, die, insbesondere zumindest bereichsweise, mit zunehmendem Abstand zur Drehachse (6) abnimmt.

11. Zellenradschleuse mit einem Gehäuse (2) und mit einem in dem Gehäuse (2) drehbar gelagerten Zellenrad (7) gemäß einem der vorstehenden Ansprüche.
